Europäisches Patentamt

European Patent Office

Office européen des brevets

(19)

(11) Publication number: **0 201 146**
A2

# EUROPEAN PATENT APPLICATION

(12)

(21) Application number: **86200804.2**

(22) Date of filing: **06.05.86**

(51) Int. Cl.⁴: **G 01 N 23/227**

(30) Priority: **07.05.85 NL 8501287**

(43) Date of publication of application: **12.11.86**
**Bulletin 86/46**

(84) Designated Contracting States: **DE FR GB NL**

(71) Applicant: **COMMUNAUTE EUROPEENNE DE L'ENERGIE ATOMIQUE (EURATOM), Bâtiment Jean Monnet Plateau du Kirchberg Boîte Postale 1907, L-1019 Luxembourg (LU)**

(72) Inventor: **von Birgelen, Gerhard, Westerweg 158, NL-1815 DK Alkmaar (NL)**
Inventor: **van der Biest, Omer, Die 17, NL-1862 HW Bergen (NL)**
Inventor: **Nagy, Endre, Akkerslaan 45, NL-1518 HK Alkmaar (NL)**
Inventor: **Schipper, Adrianus, Spaaknes 16, NL-1862 AV Bergen (NL)**

(74) Representative: **Smulders, Theodorus A.H.J. et al, Vereenigde Octrooibureaux Nieuwe Parklaan 107, NL-2587 BP 's-Gravenhage (NL)**

(54) **Apparatus for fracturing samples in vacuo.**

(57) Apparatus for fracturing samples in vacuo at a pre-determined temperature and load. The apparatus comprises a vacuum flange which on one end carries means for heating the sample, means for securing the sample, a pulling rod connected to the securing means and passed through the flange to the outside in vacuum-tight fashion, and a lever mounted for rotation relative to the other end of the flange. The lever is arranged to exercise an adjustable force on the pulling rod.

Title: Apparatus for fracturing samples in vacuo.

This invention relates to apparatus for fracturing samples in vacuo at a pre-determined temperature and load.

Materials suitable for use at elevated temperatures, such a superalloys, often exhibit failure when used under a mechanical load at a high temperature as a result of grain boundary segregation or decohesion.

A comparison of the chemical composition of an alloy in the region of a few atomic layers around the intercrystalline fracture face (the grain boundary) with the chemical composition in the interior of the grain provides information on the relationship between the grain boundary cohesion and embrittlement and segregation and corrosion. Particularly suitable for the analysis of intercrystalline fracture faces is the Auger electron spectroscopy, as the depth of field therein is 40-20 nm. In conjunction with argon ion sputtering technique, a quantitative analysis and the determination of concentration depth profiles are possible.

To avoid adsorption, and in particular oxidation at higher temperatures, the metal samples for Auger electron spectroscopy analysis must be subjected to intercrystalline fracture in an ultrahigh vacuum ($P < 10^{-5}$ Pascal).

Samples of ferritic steels for refractory metals, such as Wo, Mo, Ta, can easily be broken along the grain boundaries at low temperatures. In the case of alloys based on Ni and high-alloy austenitic steels, this is not possible. These materials do not break along the grain boundaries at low temperatures, because their grain boundary cohesion is relatively high at low temperatures.

The parameters leading to an intercrystalline fracture, such as the tensile force, temperature and standing time of the alloy being tested can be determined from known tables, e.g. the Larson-Miller creep curves. In these calculations, it should be taken into account that the grain size, sample diameter, and the shape of the notch along which the sample must be broken also affect the strength of the sample.

It is an object of the present invention to provide apparatus with which an intercrystalline fracture can be effected in a sample under ultrahigh vacuum, at a pre-determined high temperature and a pre-determined tensile force. In addition it must be possible for the part of the sample to be examined, after breakage, to be brought into a position suitable for analysis without moving the sample from the vacuum surroundings for that purpose.

To this effect the present invention provides apparatus comprising a vacuum flange which on one end carries means for heating the sample, means for securing the sample, a pulling rod connected to the securing means and passed through the flange to the outside in vacuum-tight fashion, and a lever mounted for rotation relative to the other end of the flange, said lever being arranged to exercise an adjustable force on said pulling rod.

Two embodiments of the apparatus according to the invention will now be described, by way of example, with reference to the accompanying drawings. In said drawings,

Fig. 1 shows a side-elevational view, partly in section, of a first embodiment of the apparatus according to the invention, which is suitable for fracturing samples of a relatively small diameter;

Fig. 2 shows a side-elevational view of a sample that can be broken with the apparatus shown in Fig. 1;

Fig. 3 shows a part-sectional side-elevational view of a second embodiment of the apparatus according to the invention, with which relatively thick samples can be broken; and

Fig. 4 shows a side-elevational view of a sample that can be broken with the apparatus illustrated in Fig. 3.

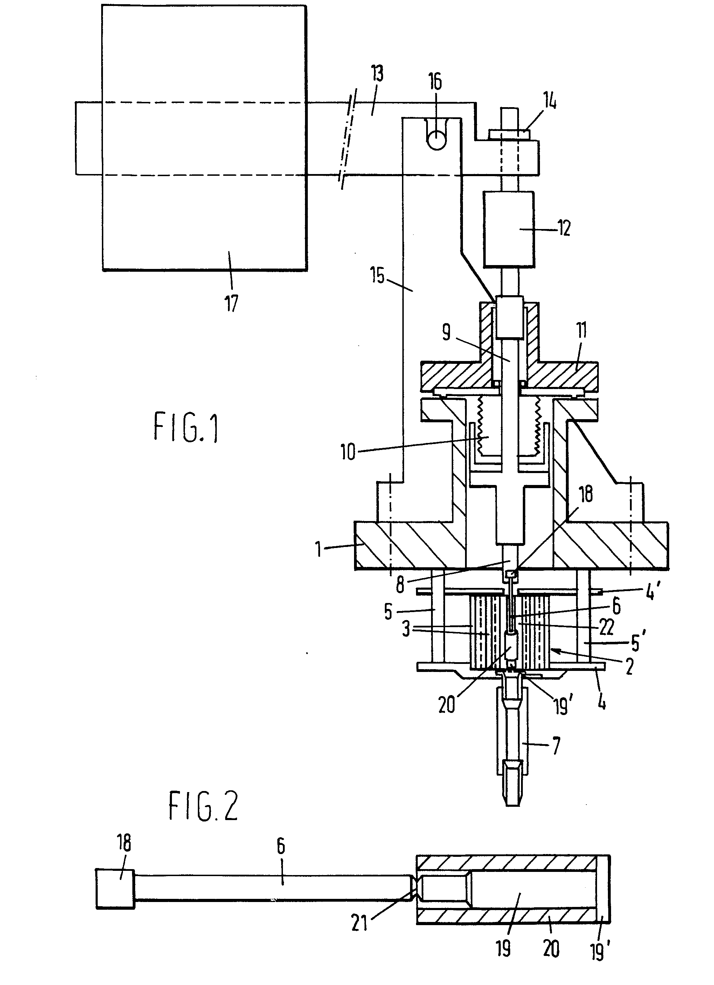

The apparatus shown in Fig. 1 is built around an ultrahigh vacuum (referred to hereinafter as UHV) flange 1, the bottom flange member of which can be secured to the sample preparation cell of an Auger electron spectrometer. Secured to the bottom of flange 1 is a furnace 2 for heating a sample to be fractured in the reaction chamber. The furnace consists of platinum heating wires wound between two coaxial ceramic tubes 3, preferably of alumina. The material for the furnace must be selected very carefully to prevent that gases are generated from the materials of the furnace upon heating the same, which could contaminate the fracture surface.

Furnace 2 is secured between two stainless steel plates 4 and 4', which can be secured to the bottom of flange 1 by means of bolts 5 and 5'. Placed in the interior of furnace 2 is the specimen 6 to be fractured. Provided at the bottom of plate 4 is a preferably flexible guide 7 by means of which the bottom part of specimen 6, after fracture thereof, can be taken to a suitable place in the preparation chamber of the Auger electron spectrometer.

Also provided in flange 1, in known manner, are vacuum-tight passages for the supply of electrical power to the heating wires of furnace 2 and for the passage of the supply wires of a thermocouple with which the temperature of the sample can be measured. For the sake of clarity these supply conduits and the thermocouple are not shown.

The apparatus is further provided with means for the exercise of a tensile force on specimen 6 to cause the same to fracture along an intercrystalline fracture surface. These means comprise a sample holder 8 to which a pulling rod 9 is connected. Pulling rod 9 is passed to the outside in a vacuum-tight manner via a UHV bellows 10 and a UHV flange 11 secured to the top part of flange 1. Pulling rod 9 is provided with a known per se device 12 for measuring the load exerted. The upper end of pulling rod 9 is secured to a lever 13 by means of an adjusting nut 14. By means of nut 14 the device can be adapted to samples of different lengths. Lever 13 is journalled for rotation, by means of a pin 16, in a support 15, which support is secured at its lower end to flange 11. A weight 17 for adjusting the pulling force exerted is movable at the free end of lever 13.

Fig. 2 shows, on an enlarged scale, an example of a specimen suitable to be broken with the apparatus illustrated in Fig. 1. The elongated specimen 6 is provided at one end with a thickened portion 18 designed to be secured in sample holder 8. The other end of sample 6 comprises a first thickened portion 19 and a second, wider thickened portion 19'. Placed around portion 19 is a ceramic tube 20, one end of which rests against portion 19'. Between the thickened portions 18 and 19, specimen 6 is provided, at the level of the other, free end of the ceramic tube 20 with a notch 21, along which notch the sample must break. In the interior of furnace 2 a ceramic tube 22 is provided around the specimen, which has a shoulder against which the other free end of the ceramic tube 20 can rest.

When a tensile force is exerted on pulling rod 9, the other free end of the ceramic tube 20 is pressed against the shoulder of tube 22. It has been found that this construction is capable of withstanding tensile forces of up to about 1000 N at temperatures of up to $850^{\circ}C$ and a vacuum of about $10^{-6}$ Pascal, with samples having a diameter of about 1 mm.

The apparatus shown in Fig. 1 is, in particular, suitable for the intercrystalline fracture of samples having a grain size of up to about 50 micrometers and a diameter of about 1 mm. In the case of samples of materials having a larger particle size, the diameter of the sample should be correspondingly larger, and the forces exerted on ceramic tubes 20 and 22 would become so large that these would break.

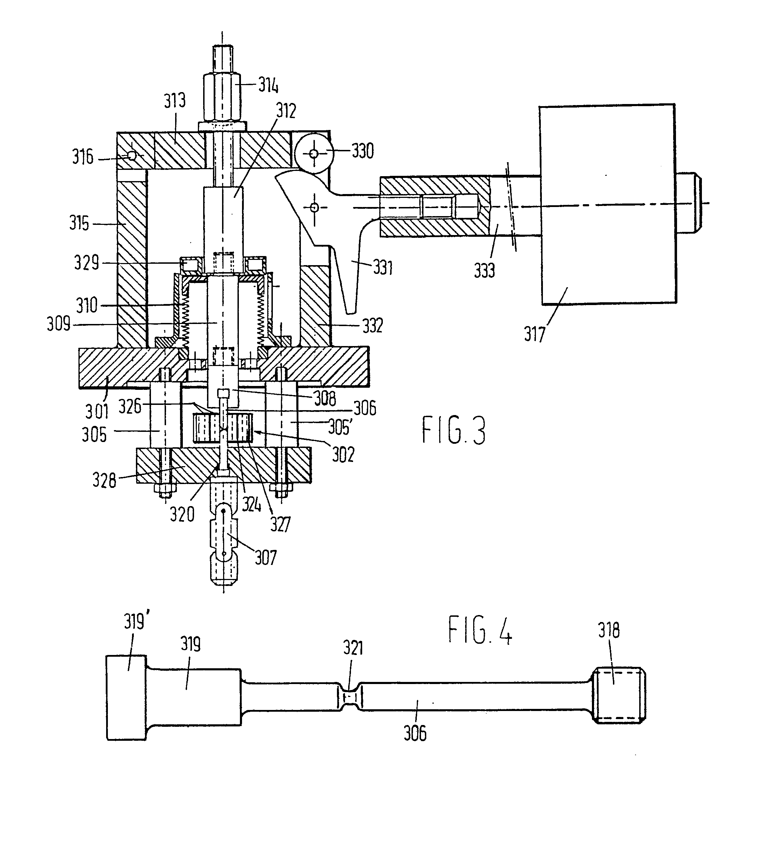

Fig. 3 shows an apparatus with which samples of alloys having a grain size of up to 1 mm and a thickness of about 4 mm can be subjected to intercrystalline fracture, for which purpose the apparatus of Fig. 1 has been modified in some points. In Fig. 3, the parts corresponding to parts of Fig. 1 are designated by the same reference numerals preceded by number 3 or 30.

Fig. 3 shows, again, a UHV flange 301 that can be secured to the preparation chamber of an Auger electron spectroscope. Provided at the bottom of flange 301 is a furnace 302, which furnace consists of a tantalum foil 324 folded in a $\Omega$-shape, and which is directly provided with current via lines not shown, which lines are passed through flange 301 in a vacuum-tight manner. The heating element 302 is surrounded by screens 326, with an additional heat shield 327 being provided around the outermost screen.

With the furnace shown in Fig. 3 the specimen 306, around which the furnace is placed, can be heated to higher temperatures (900°C) than with the furnace of Fig. 1, because there are no ceramic tubes around the sample, which in the furnace of Fig. 1 absorb a part of the heat.

Detachably secured to the bottom of flange 301, by means of bolts 305 and 305', is further a holder 328 for the foot of the sample, which holder consists of a stainless steel plate having a stepped central aperture therein. Provided at the bottom side of this plate is, again, a guide 307 for guiding the broken end of the sample, which guide, in the embodiment shown, consists of three flexibly interconnected steel elements.

The apparatus further comprises a holder 308 for the upper part of the sample, which holder is connected to a pulling rod 309, which rod is passed to outside the Auger spectroscope in vacuum-tight fashion via a UHV bellows. Just as in the apparatus of Fig. 1, a device 312 for measuring the load is connected to pulling rod 309, and the upper end of the pulling rod is secured by means of an adjusting nut 314 to a lever 313 that can turn around a pin 316 relatively to a support 315. To prevent overheating of the load measuring device 312, it is surrounded, in the vicinity of bellows 310, by a conduit 329 for water cooling.

In order that large forces may be accurately exerted on the sample to be fractured, the apparatus of Fig. 3 is provided with an eccentric lever mechanism which can cause lever 313 to turn around pin 316. For this purpose the free end of lever 313 is provided with a roller 330 which rests against an eccentric 331 rotatably journalled around a support 332 secured to flange 301. The eccentric is secured to an arm 333, at the free end of which a movable weight 317 is provided. Owing to the specific shape of eccentric 331, it is accomplished that the tensile force exerted increases linearly when arm 330 rotates around the bearing pin.

Fig. 4 shows, on an enlarged scale, the sample 306 that can be broken with the apparatus of Fig. 3. Sample 306 is provided at one end with a thickened portion 318 that can be secured in holder 308 for the top end of the

-8-

sample. The other end of the sample is provided with a first thickened portion 319 and a second, further thickened portion 319'. When the sample is mounted in the apparatus of Fig. 3, a molybdenum ring 320 is placed around the thickened portion 319, which ring prevents the sample from being welded to holder 328 by the heat and tensile force generated. The sample 306 is further provided with a notch 321, at which it has to break to produce an intercrystalline fracture.

When a sample is broken with the apparatus of Fig. 3, the eccentric lever mechanism transmits a torque load to arm 313, which torque is adjustable by means of weight 317. Changes in length of the sample are measured from arm 313 with a measuring clock with an accuracy of 1/1000 mm. The load measuring device, which may be of any known type, measures the tensile force exerted. Finally, the temperature of the sample is measured at the notch by means of a sleeve thermo-element (Ni-NiCr). The apparatus of Fig. 3 is capable of exerting tensile forces of up to about 10000 N on a sample having a diameter of 4 mm and temperatures of up to 900°C and a vacuum of $10^{-7}$ Pascal.

The apparatus of Fig. 3 not only permits breaking samples having a larger diameter, but measuring the sample diameter and mounting the sample in the apparatus are simpler procedures than with the apparatus of Fig. 1.

In the apparatus of Fig. 3, the sample is inserted into plate 328 through guide 307 and through the central aperture, whereafter a steel ring not shown is screwed onto the end 318, which ring is secured in holder 308. Setting up is effected when furnace 302 is removed, so that a thermo-element can be secured to the sample adjacent the fracture point in a simple manner, whereafter the furnace can be placed around the sample.

It will be clear that a large number of modifications can readily be made by those skilled in the art in the apparatuses as described herein without departing from the scope of the invention.

## CLAIMS

1.  Apparatus for fracturing samples in vacuo at a pre-determined temperature and load, characterized by a vacuum flange which on one end carries means for heating the sample, by means for securing the sample, by a pulling rod connected to the securing means and passed through the flange to the outside in vacuum-tight fashion, and by a lever mounted for rotation relative to the other end of the flange, said lever being arranged to exercise an adjustable force on said pulling rod.

2.  Apparatus as claimed in claim 1, characterized in that said pulling rod is connected to means for measuring the tensile force exerted and that a sliding weight is mounted on said lever.

3.  Apparatus as claimed in claim 1 or 2, characterized by the provision of means for adjusting the place where the lever engages with the pulling rod.

4.  Apparatus as claimed in claim 1, 2 or 3, characterized in that the heating means comprises coaxial ceramic tubes including a central tube having an internal shoulder, with heating wires wound between said tubes.

5.  A sample for use in apparatus as claimed in claim 4, characterized in that the sample is provided with a notch to determine a fracture face, and that the sample is elongated with a thickened portion at one end that can be secured to the lower end of the pulling rod and at the other end a first thickened portion and a second, broader thickened portion, the arrangement being such that, in use, a ceramic tube is placed around said first thickened portion to rest at one end against the second thickened portion and at its other end against the shoulder in the central tube of the heating means.

6. Apparatus as claimed in claim 1 or 2, characterized by the provision of a second lever which at one end is provided with an eccentric mounted for rotation relative to said flange and engaging with the free end of the lever, said second lever carrying at its other end a sliding weight.

7. Apparatus as claimed in claim 6, characterized in that the heating means includes a $\Omega$ -shaped heating element.

8. Apparatus as claimed in claim 6 or 7, characterized in that one end of the flange carries means for supporting the lower end of the sample.

9. A sample for use in apparatus as claimed in claim 8, characterized in that the sample is provided with a notch to determine a fracture face, and that the sample is elongated with a thickened portion at one end that can be secured in the lower end of the pulling rod and at the other end a first thickened portion and a second, broader thickened portion, the arrangement being such that, in use, an Mo-ring is placed around said first thickened portion to rest, on the one hand, against said second thickened portion and, on the other hand, against the means for supporting the lower end of the sample.

10. Apparatus as claimed in claim 4 or 8, characterized by the provision of means for guiding a severed part of the sample.

11. Apparatus as claimed in claim 10, characterized in that the means for guiding comprises at least three articulated tubular elements.

FIG.1

FIG.2

FIG.3

FIG.4